# EUROPÄISCHE PATENTSCHRIFT

(11) **EP 0 992 731 B1**
(45) Veröffentlichungstag und Bekanntmachung des Hinweises auf die Patenterteilung: **10.03.2004**
(21) Anmeldenummer: 99119551.2
(22) Anmeldetag: 01.10.1999
(51) Int. Cl.: F16L 55/11

(54) **Verschlusselement für eine Stufenbohrung eines Bauteils**
Element for closing the stepped bore of a workpiece
Elément d'obturation de l'alésage à gradins d'une pièce de construction

(30) Priorität: 08.10.1998 DE 19846379
(43) Veröffentlichungstag der Anmeldung: 12.04.2000
(73) Patentinhaber: ROBERT BOSCH GMBH, 70442 Stuttgart (DE)
(72) Erfinder: Schlitzkus, Michael, 87463 Dietmannsried (DE); Weh, Andreas, 87471 Durach (DE)

(56) Entgegenhaltungen:
- WO-A-97/12790
- DE-A- 4 439 059
- US-A- 5 377 831

## Beschreibung

### Stand der Technik

Die Erfindung geht aus von einem Verschlußelement nach der Gattung des Patentanspruchs 1.

Ein die Gattung bildendes Verschlußelement zum Verschließen einer Stufenbohrung eines Bauteils ist bekannt durch die Figur 3 der WO 97/12790. Dieses Verschlußelement ist rotationssymmetrisch ausgebildet und weist in Einbaurichtung vorauseilend einen ersten zylindrischen Längenabschnitt, daran anschließend einen zweiten Längenabschnitt mit einem größeren Durchmesser, wobei der zweite durchmessergrößere Längenabschnitt einen umfangsseitigen Bund bildet, der per Preßsitz in einem ersten durchmessergrößeren Längenabschnitt der Stufenbohrung aufgenommen ist, und einen dritten Längenabschnitt mit einem gegenüber dem zweiten Längenabschnitt kleineren Durchmesser auf, so daß Werkstoff des umgebenden Bauteils aus dem Bereich der ersten Bohrungsstufe axial gegen den umfangsseitigen Bund prägbar ist, um eine axiale Sicherung gegen hydraulisches Herausdrücken des Verschlußelements zu bilden. Des weiteren wird der Werkstoff des umgebenden Bauteils dabei auch radial gegen den dritten Längenabschnitt geprägt, wodurch eine hydraulische Abdichtung entsteht. Infolge der großen benötigten Kräfte für das Einpressen des zweiten Längenabschnitts wird dieser Arbeitsvorgang maschinell ausgeführt. Dabei kann als nachteilig angesehen werden der technische Aufwand für das Zentrieren des Verschlußelementes zur Stufenbohrung und dem unmittelbar anzuschließenden Einpressen. Ein hierfür kombiniertes Zentrier- und Einpreßwerkzeug ist teuer in der Anschaffung und in der Wartung. Des weiteren ist es notwendig, das Zentrierwerkzeug derart auszubilden, daß es mit einem Verschlußelement geladen werden kann. Des weiteren ist noch zu berücksichtigen, daß an der Fertigungsstraße, entlang der das kombinierte Zentrier- und Einpreßwerkzeug anzuordnen ist, genügend Platz zum Laden des Zentrierwerkzeugs zur Verfügung steht.

### Vorteile der Erfindung

Das erfindungsgemäße Verschlußelement mit den kennzeichnenden Merkmalen des Anspruchs 1 hat den Vorteil, daß man es beispielsweise von Hand in die Stufenbohrung einstecken und mittels einer Fingerkraft von beispielsweise 20 Newton ausreichend rüttelsicher fixieren kann dank des kegelförmigen Längenabschnitts. Ein Versuch hat gezeigt, daß nach Anwendung der angegebenen Fingerkraft eine Kraft von mehr als 5 Newton notwendig ist, um das Verschlußelement aus der Stufenbohrung zu ziehen. Folglich ist bei einem Gewicht von wenigen Gramm des Verschlußelementes eine ausreichend sichere Fixierung erreicht unter Berücksichtigung von solchen Beschleunigungen, die beim Transport des Bauteils von Fertigungsstation zu Fertigungsstation unvermeidlich sind.

Die kennzeichnenden Merkmale des Anspruches 2 ergeben den Vorteil, daß die Durchmesser des erfindungswesentlichen Kegelabschnitts gut auf die Einhaltung von Durchmessertoleranzen prüfbar sind.

### Zeichnungen

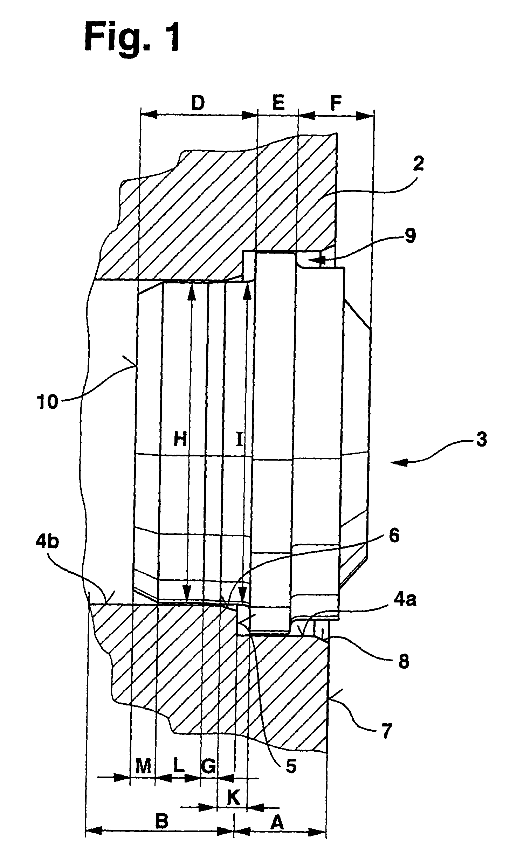

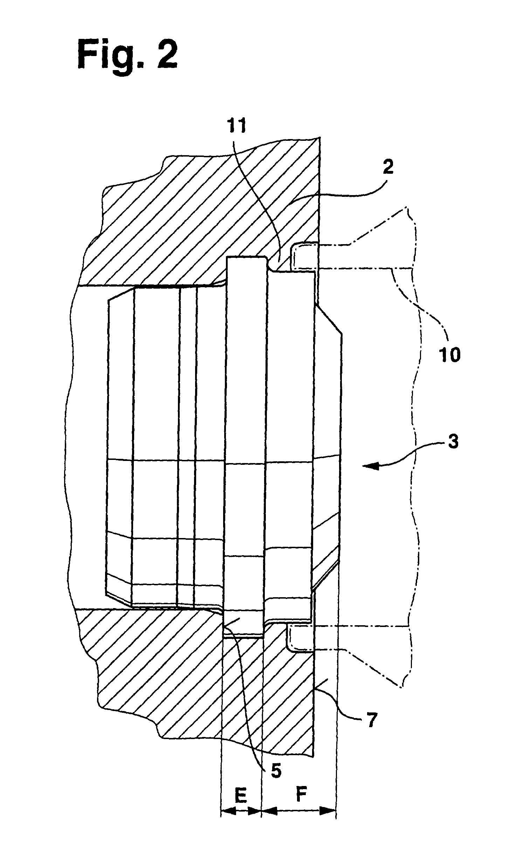

Das erfindungsgemäße Verschlußelement ist anhand von zwei Figuren dargestellt und nachfolgend näher beschrieben. Es zeigen Figur 1 das rotationssymmetrische Verschlußelement in teilweise montiertem Zustand in einer längs geschnittenen Stufenbohrung und Figur 2 das erfindungsgemäße Verschlußelement in seiner endgültigen Ausrichtung in der Stufenbohrung und in gesichertem Zustand.

### Beschreibung des Ausführungsbeispiels

Ein Bauteil 2, das zur Aufnahme des erfindungsgemäßen Verschlußelements 3 bestimmt ist, weist eine Stufenbohrung 4a, 4b auf mit einem ersten Längenabschnitt A und einer Anschlagschulter 5 und daran anschließend einen zweiten Längenabschnitt B. Dabei ist die Anschlagschulter 5 beispielsweise als eine ebene Kreisringfläche gestaltet. Erkennbar ist der Durchmesser des zweiten Bohrungsabschnittes B kleiner als der Durchmesser des ersten Bohrungsabschnittes A. Von der Anschlagschulter 5 ausgehend kann beispielsweise ein kegeliger Übergang 6 in den zweiten Bohrungsabschnitt B vorgesehen sein. Dieser kegelige Übergang 6 ist beispielsweise eine Zentrierhilfe beim späteren Einführen des erfindungsgemäßen Verschlußelements 3. In diesem Sinne kann auch am Anfang des ersten Bohrungsabschnitts A ausgehend von einer Begrenzungsfläche 7 des Bauteils 2 ein kegeliger Übergang 8 angebracht sein.

Das erfindungsgemäße Verschlußelement 3 hat einen ersten Längenabschnitt D, einen zweiten Längenabschnitt E und einen dritten Längenabschnitt F. Der Längenabschnitt E ist außen zylindrisch gestaltet und weist einen Nenndurchmesser auf, der dem Nenndurchmesser der Stufenbohrung bei 4a entspricht und dabei so auf den Nenndurchmesser bei 4a abgestimmt ist, daß der zweite Längenabschnitt E des Verschlußelements 3 innerhalb des Bohrungsabschnittes A leicht verschiebbar ist. Der dritte Längenabschnitt F des Verschlußelements 3 hat einen gegenüber dem genannten Nenndurchmesser kleineren Durchmesser, so daß beim Einbau des Verschlußelements 3 zwischen dem Umfang des dritten Längenabschnittes F und der ersten Bohrungsstufe bei 4a ein Ringraum 9, wie er in der Figur 1 dargestellt ist, zur Verfügung steht, in den in später erläuterter Weise Werkstoff des Bauteils 2 hineingeformt wird. Beispielsweise ist der dritte Längenabschnitt F im Bereich des Ringraumes 9 zylindrisch begrenzt. Daß diese zylindrische Begrenzung sich nicht auf die ganze Länge F erstreckt, ist im Prinzip unwesentlich.

Der erste Längenabschnitt D weist einen Teillängenabschnitt G auf, der kegelstumpfartig ausgebildet ist und demgemäß einen kleinen Durchmesser H und einen größeren Durchmesser I aufweist. Im dargestellten Ausführungsbeispiel befindet sich der größere Durchmesser I näher beim zweiten Längenabschnitt E als der Durchmesser H. Im Ausführungsbeispiel ist der größere Durchmesser I begrenzt durch einen zylindrischen Längenabschnitt K zwischen der kegeligen Teillänge G und dem zweiten Längenabschnitt E. Der kegelige Teillängenabschnitt G beginnt an einem zylindrischen Abschnitt L, der beim Einstecken des Verschlußelements 3 in die Stufenbohrung 4a, 4b dem kegeligen Teillängenabschnitt G vorauseilt.

In der Einsteckrichtung kann zum leichteren Einführen dem Längenabschnitt L ein kegeliger Längenabschnitt M vorgeordnet sein, wobei dieser von einer Stirnseite 10 des Verschlußteiles 3 ausgeht.

Unter Berücksichtigung der ausgewählten Länge des Teillängenabschnittes G sind die Durchmesser H und I so aufeinander abgestimmt, daß der kegelige Längenteilabschnitt G zum Längenabschnitt K hin einen Öffnungswinkel von 2 N aufweist. Hierbei wird N beispielsweise 5° betragen, so daß der Öffnungswinkel demzufolge 10° betragen wird. Abweichungen von dem genannten Betrag sind natürlich möglich und ändern nichts am gewollten Prinzip. Dieses besteht darin, daß der kleinere Durchmesser H geringfügig kleiner ist als ein Durchmesser der Stufenbohrung bei 4b, und andererseits der Durchmesser I größer ist als der genannte Durchmesser der Stufenbohrung bei 4b. Daraus ergibt sich, daß die Längenabschnitte L und M spielend leicht beispielsweise durch Unterstützung des kegeligen Überganges 6 in die Stufenbohrung bei 4b einführbar sind, daß aber danach das Einstecken gebremst wird, weil gegenüber dem Durchmesser H ein größerer Durchmesser des Teillängenabschnittes, der bewußt kegelig ausgebildet ist, auf den Durchmesser der Stufenbohrung bei 4b trifft. Die gewollte Folge ist eine Verklemmung des Teillängenabschnitts G in der Stufenbohrung. Infolge der Auswahl von 5° für die Größe N findet eine Lagesicherung per Reibung statt. Hierbei sind die Reibungskräfte, die bei einem Entfernen des Verschlußelements 3 aus der Stufenbohrung 4a, 4b nötig wären, beispielsweise ein Viertel so groß wie diejenige Kraft, mit der das Verschlußelement 3 zuvor hineingedrückt wurde.

Anders ausgedrückt: Zur Transportsicherung von einer Arbeitsstation, in der das erfindungsgemäße Verschlußelement 3 mit dem Bauteil 2 gepaart wird, zur nächstfolgenden Arbeitsstation, die der endgültigen Lagesicherung durch Verstemmen dient, ist wenigstens eines der Bauteile dieser Paarung derart kegelig ausgebildet, daß beim Eindrücken beispielsweise von Hand, Selbsthemmung vorliegt bezüglich einer gedachten Austrittsrichtung des Verschlußelements 3 aus dem Bauteil 2.

In der Figur 2 ist das Verschlußelement 3 gemäß der Figur 1 dargestellt, wobei der zweite Längenabschnitt E nach einem Einpreßvorgang an der Anschlagschulter 5 der Stufenbohrung 4a anliegt. Bei diesem Anpressen, das mittels eines nicht dargestellten Einpreßstempels erfolgte, wurde das Bauteil 2, das beispielsweise aus Aluminium besteht, im Bereich der Längenabschnitte G und K elastisch oder plastisch aufgeweitet.

Auf den beschriebenen Einpreßvorgang, der die Anlage des zweiten Längenabschnitts E des Verschlußteils 3 an der Anschlagschulter 5 des Bauteils 2 bewirkt hat, erfolgt die endgültige Lagesicherung des Verschlußelements 3 in dem Bauteil 2 dadurch, daß beispielsweise ein im wesentlichen rohrartiges und in der Figur 2 gestrichelt angedeutetes Preßwerkzeug 10 gegen die Begrenzungsfläche 7 des Bauteils 2 geführt wird. Der größere Durchmesser dieses Preßwerkzeugs 10 ist größer als der Durchmesser der Stufenbohrung bei 4a. Infolgedessen entsteht ringsum und dabei an den zweiten Längenabschnitt E des Verschlußelements 3 angrenzend ein Verstemmwulst 11, der beispielsweise radial und dadurch abdichtend an dem dritten Längenabschnitt F des Verschlußelements 3 anliegt.

Wie anhand der Figur leicht zu erkennen ist, sind die beiden Durchmesser H und I des kegeligen Längenabschnitts G dank angrenzender zylindrischer Längenabschnitte K und L leicht auf Einhaltung von zulässigen Abmaßen prüfbar. Die Erfindung ist jedoch nicht beschränkt auf die in der Figur 1 dargestellte Ausrichtung des kegeligen Teillängenabschnittes G an der gezeichneten Stelle. Vielmehr kann der kegelige Teillängenabschnitt G auch näher bei der Stirnseite 10 des Verschlußelements 3 oder aber näher beim zweiten Längenabschnitt E des Verschlußelements 3 angeordnet sein.

## Patentansprüche

1. Vorrichtung aus einem Bauteil (2) mit einer Stufenbohrung (4a,4b) , die einen an einer Begrenzungsfläche (7) des Bauteils (2) beginnenden ersten Bohrungsabschnitt (A) und über eine Stufe anschließend einen zweiten Bohrungsabschnitt (B) mit einem kleineren Durchmesser als dem Durchmesser des ersten Bohrungsabschnitts (A) aufweist und mit einem in die Stufenbohrung (4a,4b) eingesetzten und mittels einer Verstemmung (11) hydraulisch abdichtend verankerten Verschlusselement (3), das rotationssymmetrisch ausgebildet ist und einen ersten Längenabschnitt (D) hat, der in den zweiten Bohrungsabschnitt (B) einbaubar ist und das einen zweiten Längenabschnitt (E) hat, mit einem an den Durchmesser des ersten Bohrungsabschnitts (A) angepassten Durchmesser und mit einer Länge, die kleiner als die Länge des ersten Bohrungsabschnitts (A) ist, **dadurch gekennzeichnet, dass** der erste Längenabschnitt (D) des Verschlusselements (3) wenigstens auf einem Längenteilstück (G) seiner Länge als ein Kegelabschnitt ausgebildet ist, mit einem zum zweiten Längenabschnitt (E) des Verschlusselements (3) sich öffnenden Kegelwinkel von vorzugsweise 10°, wobei der kleinere Durchmesser (H) des Längenteilstücks (G) kleiner ist als der Durchmesser des zweiten Bohrungsabschnitts (B) des umgebenden Bauteils (2) und der größere Durchmesser (I) des Kegelabschnitts (G) mit dem zweiten Bohrungsabschnitt (B) der Stufenbohrung (4a,4b) eine Klemmverbindung eingeht und wobei sich Längenteilstücke (L) und (K) des Längenabschnitts (D) an den jeweiligen Enden des Längenteilstücks (G) anschließen.

2. Vorrichtung nach Anspruch 1, **dadurch gekennzeichnet, dass** der Kegelabschnitt (G) eine Länge von in etwa 15% der Länge des ersten Längenabschnitts(D) des Verschlusselements (3) hat und von dem zweiten Längenabschnitt (E) einen Abstand hat und dass zum zweiten Längenabschnitt (E) hin ausgehend vom Kegelabschnitt (G) das Verschlusselement (3) zylindrisch ausgebildet ist.

## Claims

1. Arrangement consisting of a component (2) with a stepped bore (4a, 4b), which has a first bore section (A), beginning at a boundary surface (7) of the component (2), and, adjoining via a step, a second bore section (B) of smaller diameter than the diameter of the first bore section (A), and having a closure element (3) which is inserted into the stepped bore (4a, 4b), is anchored in a hydraulically sealing manner by means of caulking (11), is of rotationally symmetrical design and has a first length section (D) which can be fitted into the second bore section (B) and a second length section (E) having a diameter adapted to the diameter of the first bore section (A) and a length which is smaller than the length of the first bore section (A), **characterized in that** the first length section (D) of the closure element (3), at least on a length segment (G) of its length, is designed as a taper section having a taper angle of preferably 10° opening towards the second length section (E) of the closure element (3), the smaller diameter (H) of the length segment (G) being smaller than the diameter of the second bore section (B) of the surrounding component (2), and the larger diameter (I) of the taper section (G) forming a clamping connection with the second bore section (B) of the stepped bore (4a, 4b), and the length segments (L) and (K) of the length section (D) adjoining the respective ends of the length segment (G).

2. Arrangement according to Claim 1, **characterized in that** the taper section (G) has a length of approximately 15% of the length of the first length section (D) of the closure element (3) and is at a distance from the second length section (E), and **in that** the closure element (3) is designed to be cylindrical towards the second length section (E) starting from the taper section (G) of the closure element (3).

## Revendications

1. Dispositif composé d'une pièce de construction (2) percée d'un alésage à gradins (4a, 4b), dont une première section (A) commence à une surface (7) délimitant la pièce (2) pour se poursuivre à travers un gradin, par une deuxième section d'alésage (B) de diamètre inférieur à celui de la section (A), avec un élément obturateur (3) de révolution inséré dans l'alésage à gradins (4a, 4b) et ancré avec étanchéité hydraulique assurée par un matage (11), cet élément présentant une première partie longitudinale (D) engagée dans la seconde section (B) de l'alésage et une seconde partie longitudinale (E) dont le diamètre est adapté à celui de la première section d'alésage (A) et dont la longueur est inférieure à celle de cette section (A),
**caractérisé en ce que**
la première partie longitudinale (D) de l'élément obturateur (3) présente, au moins sur une fraction (G) de sa longueur la forme d'un cône s'ouvrant en direction de la seconde section longitudinale (E) de l'obturateur (3) selon un angle de préférence égal à 10°, le petit diamètre de la partie conique (G) étant inférieur au diamètre de la seconde section d'alésage (B) de la pièce (2) qui l'entoure tandis que le plus grand diamètre (I) de cette partie conique (G) induit une liaison par serrage avec la seconde section (B) de l'alésage à gradins (4a, 4b), des fractions longitudinales (L) et (K) de la partie longitudinale (D) se raccordant aux extrémités correspondantes de la partie conique (G).

2. Dispositif selon la revendication 1,
**caractérisé en ce que**
la partie conique (K) a une longueur égale à 15 % environ de la longueur de la première section longitudinale (D) de l'élément obturateur (3) et elle se trouve à une certaine distance de la seconde partie longitudinale (E) en direction de laquelle l'élément obturateur (3) s'étend cylindriquement en partant de la partie conique (G).
